# EUROPÄISCHE PATENTSCHRIFT

(11) **EP 1 853 641 B1**
(45) Veröffentlichungstag und Bekanntmachung des Hinweises auf die Patenterteilung: **18.05.2016**
(21) Anmeldenummer: 06706812.2
(22) Anmeldetag: 10.02.2006
(51) Int. Cl.: C08G 18/10, C08G 18/48

(54) **VERSTÄRKTE POLYURETHANHARNSTOFFELASTOMERE UND DEREN VERWENDUNG**
REINFORCED POLYURETHANE-UREA ELASTOMERS AND THE USE THEREOF
ELASTOMERES DE POLYURETHANNE-UREE RENFORCES ET LEUR UTILISATION

(30) Priorität: 18.02.2005 DE 102005007470
(43) Veröffentlichungstag der Anmeldung: 14.11.2007
(73) Patentinhaber: Covestro Deutschland AG, 51373 Leverkusen (DE)
(72) Erfinder: HAAS, Peter, 42781 Haan (DE); ARNTZ, Hans-Detlef, 53797 Lohmar (DE)
(74) Vertreter: Levpat
(86) Internationale Anmeldenummer: PCT/EP2006/001182
(87) Internationale Veröffentlichungsnummer: WO 2006/087142

(56) Entgegenhaltungen:
- EP-A- 0 590 803
- EP-A- 0 656 381
- EP-A- 1 004 606
- DE-A1- 10 160 375

## Beschreibung

Die Erfindung betrifft verstärkte Polyurethanharnstoff-Elastomere mit einem bestimmten Harnstoff- und einem bestimmten Urethananteil sowie daraus herstellbare flächige Polyurethanformkörper mit verbesserter Zähigkeit und verbesserten Schwindungseigenschaften sowie deren Verwendung.

Die Herstellung von Polyurethanharnstoff-Elastomeren durch Umsetzung von NCO-Semiprepolymeren mit Gemischen aus aromatischen Diaminen sowie höhermolekularen Hydroxy- oder Aminogruppen enthaltenden Verbindungen ist bekannt und beispielsweise in EP-A 656 379 beschrieben. Diese Polyurethanelastomere zeigen verbesserte mechanische Eigenschaften. Um bestimmte mechanische Eigenschaften bei den daraus hergestellten Formkörpern zu erreichen, müssen den Reaktionskomponenten Verstärkungsstoffe zugesetzt werden, wodurch insbesondere thermomechanische Eigenschaften verbessert und der Biege-Elastizitäts-Modul erheblich angehoben wird. Bei mehrfacher thermischer Belastung dieser Formkörper, die beispielsweise durch mehrere Lackhärtungsschritte auftreten kann, wird allerdings beobachtet, dass es zu einer Beeinträchtigung der Schwindungswerte solcher Formteile kommen kann.

In EP-A 656381 werden verstärkte Polyurethanharnstoffe beschrieben, die aus einer Polyolkomponente, die ein Polyetherpolyol mit einem Ethylenoxid-Gehalt von 50-100 Gew.-% und ein aromatisches Diamin wie DETDA enthält, und einem Prepolymer aus einem Uretoniminmodifizierten MDI und einem Polyethertriol mit 10-85 Gew.-% EO hergestellt werden.

Wünschenswert ist jedoch ein möglichst geringer Schwindungswert sowie insbesondere eine Schwindungskonstanz auch bei wiederholten thermischen Nachbehandlungsverfahren, um letztlich passgenaue Teile fertigen zu können. Eine weitere wichtige Eigenschaft ist die Biegefestigkeit der Teile bei der Entformung.

Aufgabe war es daher, Polyurethanelastomere zur Verfügung zu stellen, die geringe Schwindung bzw. Nachschwindung bei erheblicher thermischer Beanspruchung und eine hohe Zähigkeit bei der Entformung aufweisen.

Es wurde nun überraschend gefunden, dass bestimmte, mit Verstärkungsstoffen ausgerüstete Polyurethanharnstoff-Elastomere eine problemlose Verarbeitung hinsichtlich der Herstellung von zähen, flächigen Formkörpern mit einwandfreiem Verhalten bezüglich Dimensionsstabilität auch bei erheblicher Beanspruchung durch thermische Nachbehandlung gewährleisten und insgesamt niedrige Schwindungswerte aufweisen.

Gegenstand der vorliegenden Erfindung sind durch Verstärkungsstoffe ausgerüstete Polyurethanharnstoff-Elastomere mit einem Harnstoffanteil im Bereich von 70 bis 95 Mol-% und einem Urethananteil im Bereich von 5 bis 30 Mol-%, bezogen auf Mol-% eines NCO-Äquivalents, erhältlich durch Umsetzung eines Reaktionsgemisches aus einer A-Komponente bestehend aus
A1) aromatischen Diaminen, die zumindest in jeweils einer ortho-Stellung zu den Aminogruppen einen Alkylsubstituenten aufweisen,
A2) einer aliphatischen Reaktionskomponente bestehend aus mindestens einem Hydroxyl- und/oder primäre Aminogruppen aufweisenden Polyetherpolyol der Molmasse 500 bis 18 000,
A3) gegebenenfalls aliphatischen Aminen,
A4) Verstärkungsstoffen sowie
A5) gegebenenfalls Katalysatoren und/oder Zusatzstoffen
A6) gegebenenfalls einem Metallsalz als Trennmittel
sowie einem Prepolymer als B-Komponente erhältlich aus
B1) einer Polyisocyanatkomponente bestehend aus einem verflüssigten Polyisocyanat oder Polyisocyanatgemisch der Diphenylmethanreihe, ausgenommen durch partielle Carbodiimidisierung der Isocyanatgruppen von 4,4'-Diisocyanatodiphenylmethan, dessen Gemischen mit 2,2'- und insbesondere 2,4'-Diisocyanatodiphenylmethan und Gemischen dieser Diisocyanatodiphenylmethan-Isomeren mit ihren höheren Homologen modifizierte Di- und/oder Polyisocyanate, und
B2) einer Polyolkomponente mit einer mittleren Molmasse von 500 bis 18 000, bestehend aus mindestens einem, gegebenenfalls organische Füllstoffe enthaltenden Polyetherpolyol,
dadurch gekennzeichnet, dass die Komponente A2) eine Funktionalität von 2 bis 8 sowie einen Ethylenoxid-Gehalt von 40-100 Gew.-% und einen Alkyloxiran-Gehalt von 0-60 Gew.-% und die Komponente B2) eine Funktionalität von 2 bis 8 und einen Ethylenoxid-Gehalt von < 40 Gew.-% und einen Alkyloxiran-Gehalt von > 60 Gew.-% aufweist, wobei die A-Komponente und die B-Komponente in einem solchen stöchiometrischen Mengenverhältnis umgesetzt werden, dass die Isocyanatkennzahl des erhaltenen Elastomeren im Bereich von 80 bis 120 liegt und die über die B-Komponente eingebrachte Polyolkomponente B2) 10 bis 90 Mol-% des Urethananteils darstellt. Bevorzugt werden verstärkte Polyurethanharnstoff-Elatomere mit einem Harnstoffanteil von 75 bis 95 Mol-% und einem Urethananteil von 5 bis 25 Mol-%, bezogen auf Mol-% eines NCO-Äquivalents.

Ein weiterer Gegenstand der Erfindung sind Polyurethankörper/-teile aus den erfindungsgemäßen Polyurethanharnstoffelastomeren mit guter Dimensionsstabilität nach thermischer Behandlung und hoher Bruchfestigkeit nach der Entformung.

Es ist weiterhin bevorzugt, dass die A-Komponente und die B-Komponente in einem solchen Mengenverhältnis umgesetzt werden, dass die Isocyanatkennzahl des erhaltenen Elastomeren bevorzugt im Bereich von 90 bis 115 liegt und die über die B-Komponente eingebrachte Polyolkomponente B2) 30 bis 85 % des Urethananteils darstellt.

Als Verstärkungsstoffe A4) werden bevorzugt solche Verstärkungsstoffe eingesetzt, die anorganischer Natur sind und eine Plättchen- und/oder Nadelstruktur aufweisen. Insbesondere handelt es sich dabei um Silikate der II. und III. Hauptgruppe des Periodensystems, wie Calciumsilikat vom Wollastonittyp und Aluminiumsilikate vom Glimmer- oder Kaolintyp. Solche silikatischen Verstärkungsstoffe sind bekannt unter der Bezeichnung Gruppen-, Ring-, Ketten- oder Bandsilikate z.B. in Hollemann-Wiberg, W. de Gruyter Verlag (1985) 768 bis 778 beschrieben.

Diese Verstärkungsstoffe weisen einen Durchmesser bzw. eine Tafelhöhe oder Dicke von 2 bis 30 µm sowie eine Längenausdehnung von 10 bis 600 µm auf und haben einen Längen-/Durch-messerquotienten der im Bereich 5:1 bis 35:1, bevorzugt 7:1 bis 30:1, liegt. Der Durchmesser kugeliger Anteile liegt bei 5 bis 150, bevorzugt 20 bis 100 µm.

Die genannten Verstärkungsstoffe werden üblicherweise in Mengen von 10 bis 35 Gew.-%, bevorzugt 10 bis 30 Gew.-%, bezogen auf die Gesamtmenge der Komponenten A und B zugesetzt.

Als Komponente A1) kommen aromatische Diamine in Betracht, die zumindest in jeweils einer ortho-Stellung zu den Aminogruppen einen Alkylsubstituenten aufweisen und die ein Molekulargewicht von 122 bis 400 besitzen. Besonders bevorzugt sind solche aromatischen Diamine, die in ortho-Stellung zu der ersten Aminogruppe mindestens einen Alkylsubstituenten und in ortho-Stellung zu der zweiten Aminogruppe zwei Alkylsubstituenten mit jeweils 1 bis 4, vorzugsweise 1 bis 3, Kohlenstoffatomen aufweisen. Ganz besonders bevorzugt sind solche, die in jeweils mindestens einer ortho-Stellung zu den Aminogruppen einen Ethyl-, n-Propyl- und/oder iso-Propylsubstituenten und gegebenenfalls in weiteren ortho-Stellungen zu den Aminogruppen Methylsubstituenten aufweisen. Beispiele für derartige Diamine sind 2,4-Diaminomesitylen, 1,3,5-Triethyl-2,4-diaminobenzol sowie dessen technische Gemische mit 1-Methyl-3,5-diethyl-2,6-diaminobenzol oder 3,5,3',5'-Tetraisopropyl-4,4'-diaminodiphenylmethan. Selbstverständlich können die Gemische untereinander ebenfalls eingesetzt werden. Besonders bevorzugt handelt es sich bei der Komponente A1) um 1-Methyl-3,5-diethyl-2,4-diaminobenzol oder um dessen technische Gemische mit 1-Methyl-3,5-diethyl-2,6-diaminobenzol (DETDA).

Die Komponente A2) besteht aus mindestens einem aliphatisch gebundenen Hydroxyl- und/oder primäre Aminogruppen aufweisenden Polyetherpolyol der Molmasse 500 bis 18 000, bevorzugt 1000 bis 16 000, vorzugsweise 1500 bis 15 000. Die Komponente A2) besitzt die zuvor erwähnten Funktionalitäten. Die Polyetherpolyole können in an sich bekannter Art durch Alkoxylierung von Startermolekülen oder deren Gemischen entsprechender Funktionalität hergestellt werden, wobei zur Alkoxylierung insbesondere Ethylenoxid sowie untergeordnet Alkyloxirane, wie Propylenoxid verwendet werden. Geeignete Starter bzw. Startergemische sind Succrose, Sorbit, Pentaerythrit, Gycerin, Trimethylenpropan, Propylenglykol sowie Wasser. Bevorzugt sind solche Polyetherpolyole, deren Hydroxygruppen zumindestens zu 50 %, vorzugsweise mindestens zu 70 %, insbesondere ausschließlich aus primären Hydroxygruppen bestehen. In Betracht kommen hier auch solche Polyetherpolyole, die gegebenenfalls organische Füllstoffe in dispergierter Form enthalten. Bei diesen dispergierten Füllstoffen handelt es sich beispielsweise um Vinylpolymerisate, wie sie durch Polymerisation von Acrylnitril und Styrol in Polyetherpolyolen als Reaktionsmedium entstehen (US-PS 33 83 351, 33 04 273, 35 23 093, 31 10 695, DE-PS 11 52 536), oder um Polyharnstoffe oder Polyhydrazide, wie sie durch eine Polyadditionsreaktion in Polyetherpolyolen als Reaktionsmedium aus organischen Diisocyanaten und Diaminen bzw. Hydrazin entstehen (DE-PS 12 60 142, DE-OS 24 23 984, 25 19 004, 25 13 815, 25 50 833, 25 50 862, 26 33 293, 25 50 796).

Solche Polyether sind beispielsweise beschrieben in Kunststoffhandbuch 7, Becker/Braun, Carl Hanser Verlag, 3. Auflage, 1993.

Weiterhin können als Komponente A2) primäre Aminogruppen aufweisende Polyetherpolyole eingesetzt werden, wie sie beispielsweise beschrieben werden in EP-A 219 035 und als ATPE (Amino-terminierte Polyether) bekannt sind.

Insbesondere eignen sich als Komponente A3) die sogenannten Jeffamine^{®} der Firma Texaco, die aus α,ω-Diaminopolypropylenglykolen aufgebaut sind.

Als Komponente A5) können die bekannten Katalysatoren für die Urethan- und Harnstoffreaktion eingesetzt werden, wie tertiäre Amine oder die Zinn(II)- oder Zinn(IV)-Salze höherer Carbonsäuren. Als weitere Zusatzstoffe kommen Stabilisatoren, wie die bekannten Polyethersiloxane oder Trennmittel zum Einsatz. Die bekannten Katalysatoren oder Zusatzstoffe sind beispielsweise beschrieben in Kapitel 3.4 des Kunststoffhandbuchs 7, Polyurethane, Carl Hanser Verlag (1993), S. 95 bis 119 und können in den üblichen Mengen eingesetzt werden.

Als Komponente A6) können Metallsalze wie Zinkstearat, Zinkpalmitat, Zinkoleat, Magnesiumstearat verwendet werden. Diese werden bevorzugt in Komponente A3) gelöst und eingesetzt.

Die sogenannte B-Komponente stellt ein NCO-Prepolymer auf Basis der Polyisocyanatkomponente B1) und der Polyolkomponente B2) dar und weist einen NCO-Gehalt von 8 bis 26 Gew.-%, vorzugsweise 12 bis 25 Gew.-%, aus.

Bei den Polyisocyanaten B1) handelt es sich um gegebenenfalls durch chemische Modifizierung verflüssigte Polyisocyanate oder Polyisocyanatgemische der Diphenylmethanreihe. Der Begriff "Polyisocyanat der Diphenylmethanreihe" stellt den Oberbegriff für alle Polyisocyanate dar, wie sie bei der Phosgenierung von Anilin/ Formaldehyd-Kondensaten gebildet werden und in den Phosgenierungsprodukten als Einzelkomponenten vorliegen. Der Begriff "Polyisocyanatgemisch der Diphenylmethanreihe" steht für beliebige Gemische von Polyisocyanaten der Diphenylmethanreihe, d.h. beispielsweise für die genannten Phosgenierungsprodukte, für die Gemische, die bei der destillativen Auftrennung derartiger Gemische als Destillat oder Destillationsrückstand anfallen und für beliebige Abmischungen von Polyisocyanaten der Diphenylmethanreihe.

Typische Beispiele für geeignete Polyisocyanate B1) sind 4,4'-Diisocyanatodiphenylmethan, dessen Gemische mit 2,2'- und insbesondere 2,4'-Diisocyanatodiphenylmethan, Gemische dieser Diisocyanatodiphenylmethan-Isomeren mit ihren höheren Homologen, wie sie bei der Phosgenierung von Anilin/Formaldehyd-Kondensaten anfallen, ausgenommen durch partielle Carbodiimidisierung der Isocyanatgruppen der genannten Di- und/oder Polyisocyanate modifizierte Di- und/oder Polyisocyanate, oder beliebige Gemische derartiger Polyisocyanate.

Als Komponente B2) geeignet sind insbesondere die dieser Definition entsprechenden Polyetherpolyole bzw. Gemische derartiger Polyhydroxylverbindungen. In Betracht kommen beispielsweise entsprechende Polyetherpolyole, die gegebenenfalls organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-PS 33 83 351, 33 04 273, 35 23 093, 31 10 695, DE-PS 11 52 536) oder um Polyharnstoffe oder Polyhydrazide, wie sie durch eine Polyadditionsreaktion in den Polyetherpolyolen als Reaktionsmedium aus organischen Diisocyanaten und Diaminen bzw. Hydrazin entstehen (DE-PS 12 60 142, DE-OS 24 23 984, 25 19 004, 25 13 815, 25 50 833, 25 50 862, 26 33 293 oder 25 50 796). Grundsätzlich sind als Komponente B2) Polyetherpolyole der bereits oben unter A2) genannten Art geeignet, sofern sie den zuletzt genannten Kenndaten entsprechen.

Die Polyolkomponente B2) weist eine mittlere Molmasse von bevorzugt 1000 bis 16 000, insbesondere 2000 bis 16 000, bei einer mittleren Hydroxyfunktionalität von 2 bis 8, bevorzugt 3 bis 7 auf.

Zur Herstellung der NCO-Semiprepolymeren B) werden vorzugsweise die Komponenten B1) und B2) in solchen Mengenverhältnissen zur Reaktion gebracht (NCO-Überschuß), dass NCO-Semiprepolymere mit dem oben genannten NCO-Gehalt resultieren. Die diesbezügliche Umsetzung erfolgt im Allgemeinen innerhalb des Temperaturbereichs von 25 bis 100°C. Bei der Herstellung der NCO-Semiprepolymeren wird vorzugsweise die Gesamtmenge der Polyisocyanatkomponete B1) mit vorzugsweise der Gesamtmenge der zu Herstellung der NCO-Semiprepolymeren vorgesehenen Komponente B2) umgesetzt.

Die Herstellung der erfindungsgemäßen Elastomere erfolgt nach der bekannten Reaktionsspritzgußtechnik (RSG-Verfahren, "RIM-process"), wie sie beispielsweise in DE-AS 2 622 951 (US 4 218 543) oder DE-OS 39 14 718 beschrieben ist. Die Mengenverhältnisse der Komponenten A) und B) entsprechen hierbei den stöchiometrischen Verhältnissen mit einer NCO-Kennzahl von 80 bis 120. Die Menge des in die Form eingebrachten Reaktionsgemischs wird im übrigen so bemessen, dass die Formkörper eine Dichte von mindestens 0,8, vorzugsweise 1,0 bis 1,4 g/cm³ aufweisen. Die Dichte der resultierenden Formkörper hängt selbstverständlich in starkem Maß von der Art und dem Gewichtsanteil der mitverwendeten Füllkörper ab. Im Allgemeinen handelt es sich bei den erfindungsgemäßen Formteilen um mikrozellulare Elastomere, d.h. um keine echten Schaumstoffe mit dem bloßen Auge sichtbarer Schaumstruktur. Dies bedeutet, dass gegebenenfalls mitverwendete organische Treibmittel weniger die Funktion eines echten Treibmittels als vielmehr die Funktion eines Fließmittels ausüben.

Die Ausgangstemperatur des in die Form eingebrachten Reaktionsgemischs aus den Komponenten A) und B) liegt im allgemeinen bei 20 bis 80, vorzugsweise 30 bis 70°C. Die Temperatur der Form liegt im allgemeinen bei 30 bis 130, vorzugsweise 40 bis 80°C. Bei dem zum Einsatz gelangenden Formwerkzeugen handelt es sich um solche der an sich bekannten Art, vorzugsweise aus Aluminium oder Stahl oder um metallgespritzte Epoxidwerkzeuge. Zur Verbesserung der Entformungseigenschaften können die Innenwände der verwendeten Form gegebenenfalls mit bekannten äußeren Formtrennmitteln beschichtet werden.

Die in der Form entstehenden Formteile/Formkörper können im Allgemeinen nach einer Formstandzeit von 5 bis 180 Sekunden entformt werden. Gegebenenfalls schließt sich an der Entformung ein Tempern bei einer Temperatur von ca. 60 bis 180°C während eines Zeitraums von 30 bis 120 Minuten an.

Die erfindungsgemäßen verstärkten Polyurethanharnstoffelastomere werden zur Herstellung von Formkörpern/Formteilen in an sich bekannten Verfahren verwendet.

Die erhaltenen, vorzugsweise flächigen Formkörper eignen sich insbesondere zur Herstellung von insbesondere lackierten Bauteilen im Fahrzeugbereich, z.B. flexiblen Automobilfängerschürzen bzw. von flexiblen Karosserieelementen, wie Türen und Heckklappen oder Kotflügeln von Automobilen.

Die Erfindung soll anhand der nachfolgenden Beispiele näher erläutert werden.

### Beispiele

### Ausgangsmaterialien

### Semiprepolymer 1

976 Gew.-Teile 4,4'-Diisocyanatodiphenylmethan werden bei 90°C mit 724 Gew.-Teilen des Polyetherpolyols 2 der Funktionalität 6 umgesetzt.
NCO-Gehalt nach 2 Stunden: 18,1 %

### Semiprepolymer 2

1121 Gew.-Teile 4,4'-Diisocyanatodiphenylmethan werden bei 90°C mit 779 Gew.-Teilen des Polyetherpolyols 1 der Funktionalität 3 umgesetzt.
NCO-Gehalt nach 2 Stunden: 18,2 %

### Polyol 1

Polyetherpolyol der OH-Zahl 37, hergestellt durch Alkoxylierung von Glycerin als Starter im Verhältnis von 72 Gew.-% Ethylenoxid und 18 Gew.-% Propylenoxid mit überwiegend primären OH-Gruppen.

### Polyol 2

Polyetherpolyol der OH-Zahl 28, hergestellt durch Propoxylierung des hexafunktionellen Starters Sorbit mit Propylenoxid und anschließender Ethoxylierung im Verhältnis 83:17 mit überwiegend primären OH-Gruppen.

### DETDA

Mischung aus 80 Gew.-% 1-Methyl-3,5-diethyl-2,4-diaminobenzol und 20 Gew.-% 1-Methyl-3,5-diethyl-2,6-diaminobenzol

### DABCO 33 LV

Lösung von 1,4-Diazabicyclo[2.2.2]octan in Dipropylenglycol (Fa. Air Products)

### Jeffamin D400

Polyoxypropylendiamin (Fa. Texaco)

### DBTDL

Dibutylzinndilaurat

### Wollastonit

Tremin 939-955 der Fa. Quarzwerke, Frechen
Die Verarbeitung der in folgenden beschriebenen Rezepturen erfolgte durch Reaktionsspritzgusstechnik. Die A- und die B-Komponente werden in einem Hochdruckdosiergerät nach intensiver Vermischung in einem zwangsgesteuerten Mischkopf in ein geheiztes Plattenwerkzeug einer Formtemperatur von 60°C der Abmessungen 300 x 200 x 3 mm über einen Staubalkenanguss gedrückt.

Die Temperatur der A-Komponente betrug 60°C, die Temperatur der B-Komponente betrug 50°C. Entformt wurde nach 30 Sekunden.

Die mechanischen Werte wurden nach Tempern in einem Umlufttrockenschrank (45 Min. bei 160°C) und anschließender Lagerung (24 Stunden) gemessen.

Vor jeder Serie wurde das Werkzeug mit dem Formtrennmittel Acmos 36-5130 der Fa. Acmos Bremen behandelt.

Die Mengenangaben in der Tabelle sind in Gewichtsteilen.

**Tabelle 1**

| Beispiel | 1 | 2 (Vergleich) |
|---|---|---|
| Polyol 1 | 52,5 | - |
| Polyol 2 | - | 52,5 |
| DETDA | 42,0 | 42,0 |
| Zn-Stearat | 2 | 2 |
| Jeffamin D400 | 3 | 3 |
| Dabco 33 LV | 0,3 | 0,3 |
| DBTDL | 0,2 | 0,2 |
| Summe A-Komponenten | 100,0 | 100,0 |
| Wollastonit | 64,2 | 63,6 |
| Semiprepolymer 1 | 127,6 | - |
| Semiprepolymer 2 | - | 125,5 |
| Wollastonit im Elastomer [Gew.-%] | 22 | 22 |
| Index | 105 | 105 |
| Bruch durch Biegen von Hand | nein | Ja |
| Trittfestigkeit der gebogenen Platte: Zahl der Tritte ohne Bruch | | |
| a) direkt nach Entformung | 8* | 0 |
| b) nach Temperung bei 160°C/45 min | >10 | >10 |
| Schwindungswerte (1/q) [%]: | | |
| bei RT | 0,36/1,0 | 0,58/1,1 |
| nach 1. Temperung (160°C/45 min) | 0,51/1,3 | 0,67/1,3 |
| nach 2. Temperung (160°C/45 min) | 0,53/1,3 | 0,87/1,4 |
| Reißdehnung DIN 53504 [%] | 160 | 110 |
| Biegemodul ASTM 790 [MPa] | 2100 | 1680 |
| HDT ISO 75-1/75-2 [°C] | 185 | 175 |

| | | |
|---|---|---|
| * beim 9. Tritt traten leichte Risse auf 1= in Längsrichtung q = quer zur Längsrichtung | | |

Das Polyurethanharnstoffelastomer 1 zeigt gegenüber dem Elastomer 2 (Vergleichsversuch) wichtige Vorteile bezüglich der mechanischen Eigenschaften, wie die enorme Trittfestigkeit bereits bei der Entformung der Prüfkörper im ungetemperten Zustand. Weiterhin vorteilhaft ist auch die nur geringfügige Änderung in der Schwindung bei erneuter Temperung bei 160°C für 45 Minuten. Im Vergleichsversuch beträgt die Änderung 0,2 % in Längsrichtung; d.h., dass ein 1 m langes Formteil nach erneuter Temperung 2 mm kürzer ist.

## Patentansprüche

1. Verstärkte Polyurethanharnstoffelastomere mit einem Harnstoffanteil im Bereich von 70 bis 95 Mol-% und einem Urethananteil im Bereich von 5 bis 30 Mol-%, bezogen auf Mol-% eines NCO-Äquivalents, erhältlich durch Umsetzung eines Reaktionsgemisches aus einer A-Komponente bestehend aus
A1) aromatischen Diaminen, die zumindest in jeweils einer ortho-Stellung zu den Aminogruppen einen Alkylsubstituenten aufweisen,
A2) einer aliphatischen Reaktionskomponente bestehend aus mindestens einem Hydroxyl- und/oder primäre Aminogruppen aufweisenden Polyetherpolyol der Molmasse 500 bis 18 000,
A3) gegebenenfalls aliphatischen Aminen,
A4) Verstärkungsstoffen sowie
A5) gegebenenfalls Katalysatoren und/oder Zusatzstoffen
A6) gegebenenfalls einem Metallsalz als Trennmittel
sowie einem Prepolymer als B-Komponente erhältlich aus
B1) einer Polyisocyanatkomponente bestehend aus einem verflüssigten Polyisocyanat oder Polyisocyanatgemisch der Diphenylmethanreihe, ausgenommen durch partielle Carbodiimidisierung der Isocyanatgruppen von 4,4'-Diisocyanatodiphenylmethan, dessen Gemischen mit 2,2'- und insbesondere 2,4'-Diisocyanatodiphenylmethan und Gemischen dieser Diisocyanatodiphenylmethan-Isomeren mit ihren höheren Homologen modifizierte Di- und/oder Polyisocyanate, und
B2) einer Polyolkomponente mit einer mittleren Molmasse von 500 bis 18 000, bestehend aus mindestens einem, gegebenenfalls organische Füllstoffe enthaltenden Polyetherpolyol,
**dadurch gekennzeichnet, dass** die Komponente A2) eine Funktionalität von 2 bis 8 sowie einen Ethylenoxid-Gehalt von 40-100 Gew.-% und einen Alkyloxiran-Gehalt von 0-60 Gew.-% und die Komponente B2) eine Funktionalität von 2 bis 8 und einen Ethylenoxid-Gehalt von < 40 Gew.-% und einen Alkyloxiran-Gehalt von > 60 Gew.-% aufweist, wobei die A-Komponente und die B-Komponente in einem solchen stöchiometrischen Mengenverhältnis umgesetzt werden, dass die Isocyanatkennzahl des erhaltenen Elastomeren im Bereich von 80 bis 120 liegt und die über die B-Komponente eingebrachte Polyolkomponente B2) 10 bis 90 Mol-% des Urethananteils darstellt.

2. Polyurethanformkörper/-teile aus verstärkten Polyurethanharnstoffelastomeren gemäß Anspruch 1.

3. Verwendung der Formteile/-körper gemäß Anspruch 2 zur Herstellung von lackierten Bauteilen für die Fahrzeugindustrie.

## Claims

1. Reinforced polyurethaneurea elastomers with a urea share in the range 70 to 95 mol.% and a urethane share in the range 5 to 30 mole.%, with respect to mol.% of a NCO equivalent, obtainable by reacting a reaction mixture comprising an A-component consisting of
A1) aromatic diamines which each have an alkyl substituent in at least one ortho-position to the amino groups,
A2) an aliphatic reaction component consisting of at least one polyether polyol which contains hydroxyl and/or primary amino groups and has a molecular weight of 500 to 18 000,
A3) optionally, aliphatic amines,
A4) reinforcement substances and
A5) optionally, catalysts and/or additives,
A6) optionally, a metal salt as a mould release agent
as well as a prepolymer as a B-component obtainable from
B1) a polyisocyanate component consisting of a liquefied polyisocyanate or polyisocyanate mixture from the diphenylmethane series other than di- and/or polyisocyanates modified by partial carbodiimidisation of the isocyanate groups of 4,4'-diisocyanatodiphenylmethane, its mixtures with 2,2'- and in particular 2,4'-diisocyanatodiphenylmethane and mixtures of these diisocyanatodiphenylmethane isomers with their higher homologues, and
B2) a polyol component with an average molecular weight of 500 to 18 000, consisting of at least one polyether polyol which optionally contains organic fillers,
**characterised in that** component A2) has a functionality of 2 to 8 and an ethylene oxide content of 40-100 wt.% and an alkyloxirane content of 0-60 wt.% and component B2) has a functionality of 2 to 8 and an ethylene oxide content of <40 wt.% and an alkyloxirane content of >60 wt.%, wherein the A-component and the B-component are reacted in a stoichiometric ratio by weight such that the isocyanate index of the elastomer obtained is in the range 80 to 120 and polyol component B2) introduced via the B-component represents 10 to 90 mol.% of the urethane share.

2. Polyurethane moulded items/parts made from reinforced polyurethaneurea elastomers in accordance with Claim 1.

3. Use of the moulded parts/items in accordance with Claim 2 to produce lacquered components for the vehicle industry.

## Revendications

1. Élastomères renforcés en polyuréthane présentant une proportion d'urée dans la plage de 70 à 95% en mole et une proportion d'uréthane dans la plage de 5 à 30% en mole, par rapport au % en mole d'un équivalent NCO, pouvant être obtenus par transformation d'un mélange réactionnel constitué par un composant A, constitué par
A1) des diamines aromatiques qui présentent au moins un substituant alkyle dans, à chaque fois, une position ortho par rapport aux groupes amino,
A2) un composant de réaction aliphatique, constitué par au moins un polyétherpolyol présentant une masse molaire de 500 à 18.000, présentant des groupes hydroxyle et/ou amino primaire,
A3) le cas échéant des amines aliphatiques,
A4) des substances de renforcement ainsi que
A5) le cas échéant des catalyseurs et/ou des additifs
A6) le cas échéant un sel métallique comme agent de démoulage
ainsi que par un prépolymère comme composant B, pouvant être obtenu à partir
B1) d'un composant polyisocyanate constitué par un polyisocyanate ou un mélange de polyisocyanates, liquéfié, de la série des diphénylméthanes, à l'exception des diisocyanates et/ou des polyisocyanates modifiés par carbodiimidisation partielle des groupes isocyanate du 4,4'-diisocyanatodiphénylméthane, de ses mélanges avec du 2,2'-diisocyanatodiphénylméthane et en particulier avec du 2,4'-diisocyanatodiphénylméthane et des mélanges de ces isomères de diisocyanatodiphénylméthane avec leurs homologues supérieurs, et
B2) d'un composant polyol présentant une masse molaire moyenne de 500 à 18.000, constitué par au moins un polyétherpolyol, contenant le cas échéant des charges organiques, **caractérisés en ce que** le composant A2) présente une fonctionnalité de 2 à 8 ainsi qu'une teneur en oxyde d'éthylène de 40-100% en poids et une teneur en alkyloxirane de 0-60% en poids et le composant B2) présente une fonctionnalité de 2 à 8 et une teneur en oxyde d'éthylène < 40% en poids et une teneur en alkyloxirane > 60% en poids, le composant A et le composant B étant transformés dans un rapport stoechiométrique des quantités tel que l'indice de diisocyanate de l'élastomère obtenu se situe dans la plage de 80 à 120 et le composant polyol B2) introduit via le composant B représente 10 à 90% en mole de la proportion d'uréthane.

2. Pièces/corps moulés en polyuréthane, en élastomères renforcés en polyuréthane selon la revendication 1.

3. Utilisation des pièces/corps moulés selon la revendication 2 pour la fabrication de pièces laquées pour l'industrie de véhicules.
